# EUROPEAN PATENT SPECIFICATION

(11) **EP 0 422 784 B1**
(45) Date of publication and mention of the grant of the patent: **27.11.1996**
(21) Application number: 90310194.7
(22) Date of filing: 18.09.1990
(51) Int. Cl.: G06F 3/023, G06F 3/033, G06T 11/60

(54) **Information transfer in information processing systems**
Informationsübertragung in einem Informationsverarbeitungssystem
Transfert d'information dans un système de traitement de l'information

(30) Priority: 13.10.1989 US 421479
(43) Date of publication of application: 17.04.1991
(73) Proprietor: International Business Machines Corporation, Armonk, N.Y. 10504 (US)
(72) Inventor: Malcolm, Jerry Walter, Austin, Texas 78758 (US)
(74) Representative: Burt, Roger James, Dr.

(56) References cited:
- EP-A- 0 109 581
- EP-A- 0 178 499
- EP-A- 0 312 480

## Description

This invention relates to a method for selectively transferring information among different operating session being executed by a workstation having a video display.

Contemporary workstations use high speed computers to drive video displays in response to controls provided by human users through input/output devices such as a keyboard, a mouse or a pointer. Often the entry of raw information into the information processing system must be repeated to adjust for differences in format or structure between programs or sessions running on the workstation. In the context of business applications, customer information or the like entered into one session or program is frequently re-entered for different sessions or programs. Many workstations fail to provide a media and data structure for directly linking information between programs or sessions.

A partial solution to the movement of information from one program or session to another is typified by the clipboard class of utility programs available in many workstations. In general, the clipboard program permits the human operator to identify desired information in a video display by circumscribing the region with a rectangular perimeter line controlled by a mouse or keyboard and then storing the information within the defined region for future use. The information stored by the clipboard program can thereafter be selectively pasted into a destination screen upon command, once or a multiplicity of times. Though the movement of information using a clipboard concept has significantly reduced the burden of full data re-entry, the clipboard creates ambiguous situations when used with programs having video displayed patterns including both protected and unprotected fields.

Protected fields are those regions of a video display pattern which may not be changed by the user in the course of interacting with the program operating on the workstation. Typical examples of protected fields are prompts such as "name and "street address", which appear in record generation programs. The unprotected fields in such text applications are the spaces which accept data from the user entered by keyboard or other input device. As was noted earlier, the ideal information processing system would upon receipt of data into an unprotected field immediately replicate or link that data to corresponding other unprotected fields among various related programs or sessions. Unfortunately, such links or threads are not commonly available and are being further complicated with the trend toward information composed of graphic characters such as icons or bit mapped pattern representations.

EP0,312,480 described a cut and paste technique for transferring data marked by a user between first and second locations on a computer display screen. The use of a clipboard utility to copy selected patterns from a source screen and thereafter selectively transfer such patterns to a destination screen by pasting clearly has appeal given that the process encompasses the movement of both text and graphic representations. However, when used with video display programs or sessions having a mix of protected and unprotected fields, the clipboard may mislead the user, and as a consequence introduce pervasive errors in the data being transferred. The present invention both recognises the potential for such errors and provides a solution for using a clipboard utility to transfer information between programs and sessions without losing control of the data characteristics and with a full awareness of the effects that a pasting operations will have upon the information.

Viewed from a first aspect the invention provides a method for allowing the user of a computer workstation having a video display and processing logic responsive to user input to selectively transfer information within said video display, comprising the steps of: defining on the video display source information to be transferred; defining on the video display the destination for selected source information; the method being characterised by the steps of: comparing selected source information subject to transfer to selected information in the destination; and selectively transferring source information to the destination in reliance upon the comparison.

In one embodiment of the invention, the operator of an information processing system selects from a video display source the information to be transferred. Thereafter, the operator selectively defines the destination for pasting the information. Before pasting is actually executed, the source and destination information is compared for mismatches, with the reconciliation as to pasting controlled by the workstation operator. In a more particularized form, the invention involves the creation of a clipboard copy of source information using operator defined patterns which encompass source space having protected and unprotected fields. Pasting of the clipboard patterns onto destination space having protected and unprotected fields follows a comparison of protected field information for coincidence. If coincidence, or other specified matching condition occurs, the unprotected fields are transferred without operator intervention. Otherwise, the operator is notified of a mismatch to insure that the information in the unprotected fields is correctly related to the characteristics in the associated protected fields of the destination space.

The use of the clipboard concept is particularly useful in transferring information within an emulator workstation environment. The information transferred can include text characters as well as graphics and in the course of such transfer can be further modified or deleted.

Viewed from a second aspect the invention provides an information processing system having a video display to display for selection source information to be transferred to a destination space on said video display, characterised by processing logic for detecting a mismatch between selected source information and selected information in said destination space and for selectively transferring source information to the destination in reliance upon said detection.

These and other features of the invention will be more clearly understood and appreciated upon considering the ensuing detailed description.

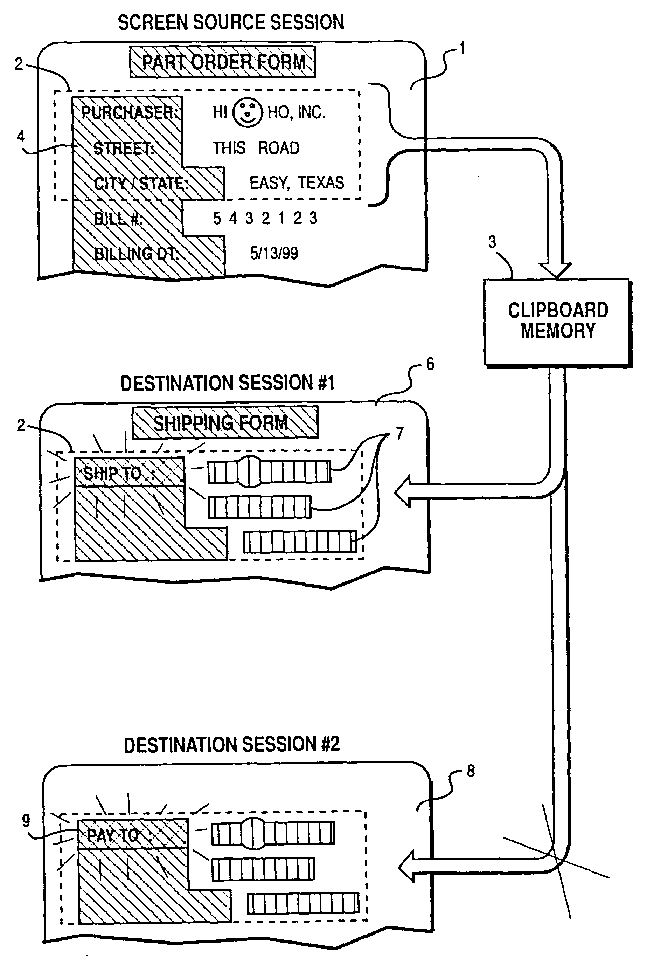

The drawing schematically illustrates the creation of a clipboard using source space information and its subsequent pasting in one or more destination space sessions.

The direct use of a clipboard function in the transfer of information between programs or sessions, for example in a multiprocessor workstation session, will introduce errors and confusion if performed with both source and destination information having protected and unprotected fields. For example, the operator will prefer to carry protected field information from the source to the clipboard as a means of temporally identifying the information and correlating the protected and unprotected information during the pasting operation. Furthermore, such workstation operator will recognize the existence and function of protected fields, and would therefore not expect to alter the destination space protected fields during the pasting operation. In this context, the operator would benefit from a method which allowed copying of information to clipboard and subsequent rapid pasting of clipboard information with minimum operator intervention, preferably such intervention arising only when the pasting operation could introduce an error.

In general, the present invention contemplates that the protected fields from the source be copied onto the clipboard so as to retain their protected field identity. During pasting, if the source protected fields and the destination protected fields match according to defined parameters, for example identical by pixel, colour or character class, the pasting operation would proceed immediately without operator intervention. On the other hand, a mismatch would involve further analysis and potential notification of the operator to elicit whether supervisory intervention is needed in executing the pasting of the associated clipboard unprotected fields.

It is possible that the fields transferred to the clipboard may not align with the fields in the destination space, or that the operator desires and misperceives that the whole of the clipboard information, protected and unprotected, will be replicated in the destination space. Again, according to the present invention, if the protected fields match according to the defined criteria, the operator would not be burdened with a decision and associated operating delay.

A preferred embodiment of the invention is schematically depicted in the drawing. According to the embodiment, a user situated before an information processing system, such as a workstation with a resident computer or a terminal connected to a network having a host computer, selects from a source in a first program session screen 1 text, graphics or a combination thereof having the information or data which is to be replicated in whole or in part in destination screens or sessions. To begin, the user manipulates a keyboard, mouse or other physical pointing mechanism, to establish a perimeter, such as the rectangular perimeter defined by line 2, to select from the whole of the space of the source screen 1 the selected information to be transferred and stored in the system memory as a clipboard. Though it is possible to erase the source screen information within the perimeter line 2 as an element of transferring it to clipboard memory 3, the more likely practice will involve a mere copying of the information into clipboard memory.

Clipboard memory 3 may be a part of the frame buffer memory, a part of the system memory, dedicated system memory, or even nonvolatile memory such as disk storage. The form of the information transferred is also not constrained to alphanumeric characters, but may include a full bit map reproduction with information regarding the protection status of each character or pixel. As to the later facet of the information being transferred to clipboard memory 3, note that perimeter 2 encloses a mix of protected and unprotected fields, where the protected fields are shown by right sloping section lines encompassing words such as "PURCHASER". Therefore, the program which generated the illustrated source screen was structured to prevent user modification of the prompt information within protected regions 4 while operating in the source session. The clipboard memory 3 stores the complete copy of the source screen information within perimeter line 2, including the protected field status.

In the context of the defined information processing system, the operator thereafter desires to transfer selected information stored in clipboard memory 3 to destination sessions or programs with a minimum amount of intervention and delay. Elaborating somewhat, though rapid transfers of information from clipboard memory 3 are sought, error avoidance remains a preeminent consideration. To attain this goal, the present invention requires that the information within perimeter line 2, copied to clipboard memory 3, be evaluated by the workstation processor before being pasted into a destination session screen such as 6. Therefore, during or after manipulation of clipboard information by mouse or the like on the destination space screen, the clipboard information is logically compared to the information in the destination space region within perimeter line 2. In the schematically depicted example, the protected fields within perimeter 2 of the destination session, the prompt field having the words "SHIP TO", is compared to the protected field information conveyed by the clipboard memory. In this case, "SHIP TO" would not be equivalent to the three prompt lines worded "PURCHASER", "STREET" and "CITY/STATE" on an alphanumeric basis of comparison. Once the mismatch is identified by the system, the operator is notified by an audible signal, a visible color changes, a visible background inversion, a pulsing video or other interactive response.

The operator then chooses whether to paste the unprotected information from the clipboard memory, generally at 7, into the unprotected field of destination session 6 notwithstanding the inconsistency of the protected field information, such as in the depicted example where the "PURCHASER", "STREET", and "CITY/STATE" fields and "SHIP TO" fields do not match. Consequently, the present invention provides a means for using a clipboard to rapidly transfer information between sessions in a workstation while ensuring that the operator is warned in those situations where the pasting of the clipboard information could produce errors.

The protected field comparison and notification method of the present invention is particularly valuable in avoiding errors when relatively large volumes of information are being transferred via the clipboard memory into a multiplicity of destination sessions having one or more protected fields that exhibit minor differences in text, yet require completely different source session information. For example, consider destination session 8 having within its protected field 9 the prompt "PAY TO" in contrast to the source session prompt "PURCHASER". In the practice of the present method the operator is notified of the mismatch within the protected fields and thereby would avoid the erroneous copying of the clipboard information onto the destination session as a consequence of misreading the first prompt word.

Note that the present invention as schematically depicted is not limited to alphanumeric text, but includes graphic representations in the unprotected as well as the protected fields. Likewise, the invention contemplates embodiments in which the notification of a protected field mismatch as conveyed to the operator may be selective as to content, for example where only the mismatched portion of the whole protected field may be accentuated for operator consideration. Such precise field or partial field identification of the mismatching information is particularly useful when large blocks of information are being transferred through the clipboard media. Refinements in the control of the clipboard to insure alignment of the source information in the destination video display space is a recognized form of information manipulation, therefore well within the scope of the contemplated present method. Though pattern mismatching in a graphics environment is clearly more elaborate than in a text mode, fundamental pattern recognition technologies are fully applicable to the method of the present invention as necessary to meet the complexities of the information within the protected fields.

The present invention finds particular and immediate use in emulator environments, where advance personal computers, often referred to as workstations, having multi-tasking capability are operating in multiple sessions including, e.g., a terminal emulator session. The presence of protected fields is particularly prevalent in terminal sessions that now appear on such workstations. Nevertheless, the multi-tasking capabilities of such workstation provide the ability to utilize a clipboard utility for copying emulator session information from a source session to a destination session, the latter session similarly exhibiting a protected field operating mode.

The invention recognizes the need for transferring blocks of information through a clipboard media in the context of protected and unprotected fields with relative haste. In recognition of this objective, the method defines a sequence in which operator intervention is selective, is less error prone, and is based upon manipulations performed at high speed within the information processing environment. As a consequence, contemporary clipboard techniques can readily be used in combination with classic emulators having mixed field characteristics.

Though the invention has been illustrated and described by way of a specific embodiment, the invention should be understood to encompass the full scope of practices defined by the claims set forth hereinafter.

## Claims

1. A method for allowing the user of a computer workstation having a video display and processing logic responsive to user input to selectively transfer information within said video display, comprising the steps of:
defining on the video display source information to be transferred;
defining on the video display the destination for selected source information;
the method being characterised by the steps of:
comparing selected source information subject to transfer to selected information in the destination; and
selectively transferring source information to the destination in reliance upon the comparison.

2. A method as claimed in Claim 1, wherein the step of defining source information to be transferred comprises the copying to clipboard storage of a protected field and an unprotected field.

3. A method as claimed in Claim 1 or Claim 2, wherein the defined destination for selected information includes a protected field and an unprotected field.

4. A method as claimed in any preceding claim, wherein the step of comparing involves a comparison of information within a source protected field to any information within a corresponding destination protected field.

5. A method as claimed in Claim 4, wherein the comparison uses characters within the protected fields.

6. A method as claimed in any preceding claim, further comprising the step of:
notifying the user of detected mismatch resulting from the comparison of the selected source information with the selected information in the destination.

7. A method as claimed in any preceding claim, wherein the step of selectively transferring the selected source information is responsive to user input.

8. An information processing system having a video display to display for selection source information to be transferred to a destination space on said video display, characterised by processing logic for detecting a mismatch between selected source information and selected information in said destination space and for selectively transferring source information to the destination in reliance upon said detection.

9. An information processing system as claimed in Claim 8, wherein said selected source information and said destination space include protected and unprotected fields, and said processing logic compares selected source information protected fields with destination space protected fields to detect said mismatch.

10. An information processing system as claimed in Claim 8 or Claim 9, wherein said selected source information is selected in response to user inputs defining a portion of displayed source information.

## Patentansprüche

1. Ein Verfahren, um dem Benutzer eines Arbeitsplatzrechners mit einer Bildausgabe und Verarbeitungslogik, die auf eine Benutzereingabe reagiert, zu ermöglichen, selektiv Informationen mit dieser Bildausgabe zu übertragen, welches Schritte enthält, um
auf der Bildausgabe die Quellinformation zu definieren, die zu übertragen ist;
auf der Bildausgabe das Ziel für die ausgewählte Quellinformation zu definieren;
wobei das Verfahren durch die Schritte gekennzeichnet wird, um
die ausgewählte Quellinformation zu vergleichen, die an die ausgewählte Information im Ziel zu übertragen ist; und
um selektiv, im Vertrauen auf den Vergleich, die Quellinformation an das Ziel zu übertragen.

2. Ein Verfahren wie in Anspruch 1 angemeldet, wobei der Schritt zum Definieren der zu übertragenden Quellinformation das Kopieren eines geschützten und eines ungeschützten Feldes in einen graphischen Zwischenspeicher enthält.

3. Ein Verfahren wie in Anspruch 1 oder 2 angemeldet, wobei das definierte Ziel für die ausgewählte Information ein geschütztes und ein ungeschütztes Feld enthält.

4. Ein Verfahren wie in irgendeinem vorhergehenden Anspruch angemeldet, wobei der Schritt zum Vergleichen einen Vergleich der Information in einem geschützten Quellfeld mit der Information in einem entsprechenden geschützten Zielfeld enthält.

5. Ein Verfahren wie in Anspruch 4 angemeldet, wobei der Vergleich Zeichen innerhalb der geschützten Felder benutzt.

6. Ein Verfahren wie in irgendeinem vorhergehenden Anspruch angemeldet, das außerdem den Schritt enthält, um den Benutzer von der erkannten, fehlenden Übereinstimmung zu informieren, die aus dem Vergleich der ausgewählten Quellinformation mit der ausgewählten Zielinformation resultiert.

7. Ein Verfahren wie in irgendeinem vorhergehenden Anspruch angemeldet, wobei der Schritt zur selektiven Übertragung der ausgewählten Quellinformation auf die Benutzereingabe reagiert.

8. Ein Informationsverarbeitungssystem mit Bildausgabe, um zur Auswahl die Quellinformation anzuzeigen, die an einen Zielraum in dieser Bildausgabe zu übertragen ist, das durch die Verarbeitungslogik zur Erkennung einer fehlenden Übereinstimmung zwischen ausgewählter Quellinformation und ausgewählter Information in diesem Zielraum und durch die selektive Übertragung der Quellinformation an das Ziel im Vertrauen auf diese Erkennung gekennzeichnet wird.

9. Ein Informationsverarbeitungssystem wie in Anspruch 8 angemeldet, wobei die ausgewählte Quellinformation und der Zielraum geschützte und ungeschützte Felder enthalten, und diese Verarbeitungslogik die ausgewählte Quellinformation der geschützten Felder mit dem Zielraum der geschützten Felder vergleicht, um die fehlende Übereinstimmung zu erkennen.

10. Ein Informationsverarbeitungssystem wie in Anspruch 8 oder 9 angemeldet, wobei die ausgewählte Quellinformation als Reaktion auf Benutzereingaben ausgewählt wird, die einen Teil der angezeigten Quellinformation definiert.

## Revendications

1. Procédé pour permettre à l'utilisateur d'un poste de travail d'un ordinateur comportant un affichage vidéo et une logique de traitement sensible à une entrée par l'utilisateur de transférer de l'information de manière sélective dans ledit affichage vidéo, comprenant les étapes suivantes:
définition sur l'affichage vidéo de l'information de la source à transférer;
définition sur l'affichage vidéo de la destination de l'information de la source sélectionnée;
le procédé étant caractérisé par les étapes suivantes:
comparaison de l'information de la source sélectionnée soumise au transfert avec l'information sélectionnée dans la destination; et
transfert sélectif de l'information source vers la destination en fonction de la comparaison.

2. Procédé selon la revendication 1, dans lequel l'étape de définition de l'information de source à transférer comprend le copiage dans la mémoire presse-papiers d'un champ protégé et d'un champ non protégé.

3. Procédé selon la revendication 1 ou la revendication 2, dans lequel la destination définie pour l'information sélectionnée comporte un champ protégé et un champ non protégé.

4. Procédé selon l'une quelconque des revendications précédentes, dans lequel l'étape de comparaison met en oeuvre la comparaison de l'information dans un champ protégé de source avec n'importe quelle information dans un champ protégé de destination correspondant.

5. Procédé selon la revendication 4, dans lequel la comparaison utilise des caractères dans les champs protégés.

6. Procédé selon l'une quelconque des revendications précédentes, comprenant en outre l'étape suivante:
notification à l'utilisateur d'une mauvaise correspondance détectée résultant de la comparaison de l'information de source sélectionnée avec l'information sélectionnée dans la destination.

7. Procédé selon l'une quelconque des revendications précédentes, dans lequel l'étape de transfert sélectif de l'information de source sélectionnée est sensible à une entrée par utilisateur.

8. Système de traitement de l'information comportant un affichage vidéo pour afficher une information de source de sélection à transférer vers un espace de destination sur ledit affichage vidéo, caractérisé par une logique de traitement afin de détecter une mauvaise correspondance entre l'information de source sélectionnée et l'information sélectionnée dans ledit espace de destination et pour transférer sélectivement l'information de source à la destination en fonction de ladite détection.

9. Système de traitement de l'information selon la revendication 8, dans lequel ladite information de source sélectionnée et ledit espace de destination comportent des champs protégés et non protégés, et ladite logique de traitement compare les champs protégés de l'information de source sélectionnée avec les champs protégés de l'espace de destination pour détecter ladite mauvaise correspondance.

10. Système de traitement de l'information selon la revendication 8 ou la revendication 9, dans lequel ladite information de source sélectionnée est sélectionnée en réponse aux entrées de l'utilisateur définissant une partie de l'information de source affichée.
